# EUROPEAN PATENT APPLICATION

(11) **EP 1 168 562 A2**
(43) Date of publication of application: **02.01.2002**
(21) Application number: 01113563.9
(22) Date of filing: 13.06.2001
(51) Int. Cl.: H02J 3/00

(54) **Electric power marketing method and electric power marketing system**

(30) Priority: 14.06.2000 JP 2000178171
(71) Applicant: MITSUBISHI DENKI KABUSHIKI KAISHA, Tokyo 100-8310 (JP)
(72) Inventor: Matsuo, Satoko, Chiyoda-ku, Tokyo 100-8310 (JP); Sakamoto, Tadaaki, Chiyoda-ku, Tokyo 100-8310 (JP); Terashita, Naotaka, Chiyoda-ku, Tokyo 100-8310 (JP); Ozaki, Yoshihiko, Chiyoda-ku, Tokyo 100-8310 (JP); Ohi, Tadashi, Chiyoda-ku, Tokyo 100-8310 (JP); Hirai, Kenji, Chiyoda-ku, Tokyo 100-8310 (JP); Nakagawa, Takashi, Chiyoda-ku, Tokyo 100-8310 (JP); Tanaka, Makoto, Chiyoda-ku, Tokyo 100-8310 (JP); Kitayama, Masashi, Chiyoda-ku, Tokyo 100-8310 (JP); Takahashi, Chie, Chiyoda-ku, Tokyo 100-8310 (JP)
(74) Representative: HOFFMANN - EITLE

(57) **Abstract**

An electric power marketing method using a computer system in accordance with this invention includes the steps of displaying a marketing menu screen via a network to solicit plural electric power buyers; gathering information relating to electric power purchases by the plural electric power buyers; an electric power purchase compiling for combining electric power purchases by the plural electric power buyers based on information relating to their individual electric power purchases to compile an aggregated electric power purchase with high added value for a marketer; and contracting with the marketer to complete the aggregated electric power purchase.

## Description

### BACKGROUND OF THE INVENTION

### Field of the Invention

The present invention relates to an electric power marketing method and electric power marketing system for marketing electric power using a computer system.

### Description of Related Art

Electric power companies ("local utilities" below) that own electric power generating and delivery facilities, including generating plants, transmission equipment, and lines, have conventionally sold power to users within their service area based on service contracts relating to such factors as power consumption and the time of day. Deregulation of the electric industry has, however, made it possible for users to contract with electric power suppliers other than the local utility. This has led to the development of various ways of marketing electric power.

An exemplary electric power marketing method is taught in Japanese Laid-Open Patent Publication 308771/1999. This electric power marketing method teaches a way for an intermediary to function as a single large buyer purchasing power on behalf of a large number of users that have contracted with the intermediary as their electrical supplier. The intermediary then aggregates demand from these plural users to purchase electric power at a low price from the local utility. The local utility can generally generate and market power more efficiently when power is purchased in large units, and can therefore market the power at a lower cost to the high volume buyer.

It should be noted that an "electric power buyer," or simply "buyer," as used herebelow refers to any party that purchases electric power, whether said party is the end user that actually consumes the power or is a reseller (intermediary) that purchases electric power for resale and not specifically for its own consumption. A "marketer" refers to a party that can market electric power, whether or not said party has its own power generating capacity. "Power" is also used synonymously with "electric power." It should be further noted that an intermediary having an electric power marketing contract with another reseller is also considered to be a marketer, and conventional utilities and electric power generating companies that actually own the power generating facilities, transmission equipment, and lines are apparently also marketers.

While a marketer in the conventional marketing method described above is a high volume purchaser aggregating orders from numerous users, there is not necessary much added value for the marketer in simply increasing the amount of power purchased from the generating company (producer). It can therefore be less expensive in cases to purchase electric power without combining power purchases of users, and the power buyer therefore ends up buying power at a higher price.

Furthermore, if the high volume buyer simply combines demand from plural users, the aggregated demand could result from a combination of power purchases of only users with high daytime consumption, or a combination of power purchases of users resulting in an even higher difference between daytime and nighttime consumption. In such cases there is little added value for the marketer, and the marketer therefore cannot sell electric power to the buyer at low cost.

Changes in thinking about nuclear power plants and growing interest in environmental protection have also led typical electric power buyers to consider factors other than just price when considering buying electric power. These other factors include how the power is generated (whether from thermal power plant, nuclear power plant, wind, or other means), and the effect the power generating means has on the environment. Conventional electric power marketing methods do not, however, enable the electric power buyer to choose the electric power producer. In addition, the electric power buyer cannot choose the generating means or select from a number of fee patterns.

Furthermore, unlike conventional tangible products that can be stored between production and sale, electric power cannot be easily stored. This means that the electric power producer must generate enough power to meet current demand in real time. It is also necessary to adjust the delivery system, that is, the power transmission system for delivering power, in real time so as to maintain stable delivery to each electric power buyer. Contracts between producer and buyer are also made in writing in advance of consumption, and it is not easy to change contract content in real-time.

### SUMMARY OF THE INVENTION

The present invention was conceived with consideration for the above mentioned problems, and has as its object to provide an electric power marketing system and electric power marketing method providing the marketer with high added value, enabling the electric power buyer to assemble aggregated electric power purchases as desired, and electric power can be marketed more cheaply.

To achieve this object an electric power marketing method according to the present invention is an electric power marketing method using a computer system, the electric power marketing method having a step for displaying a marketing menu screen via a network to solicit plural electric power buyers; a step for gathering information relating to electric power purchases by the plural electric power buyers; an electric power purchase compiling step for combining electric power purchases by the plural electric power buyers based on the information relating to their individual electric power purchases to compile an aggregated electric power purchase with high added value for the marketer; and a step for contracting with the marketer to complete the aggregated electric power purchase. It is therefore possible to widely gather from an undetermined large number of electric power buyers information relating to their electric power purchases, and compile based on this information an aggregated electric power purchase that increases the ability of the electric power buyer to negotiate with the marketer.

Furthermore, an electric power marketing system according to the present invention has means for displaying a marketing menu screen via a network; means for gathering information relating to electric power purchases by the plural electric power buyers; means for combining electric power purchases by the plural electric power buyers based on the information relating to their individual electric power purchases to compile an aggregated electric power purchase with high added value for the marketer; and means for contracting with the marketer to complete the aggregated electric power purchase. It is therefore possible to widely gather from an undetermined large number of electric power buyers information relating to their electric power purchases, and compile based on this information an aggregated electric power purchase that increases the ability of the electric power buyer to negotiate with the marketer.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a schematic diagram showing an electric power marketing system according to a first preferred embodiment of the present invention;
FIG. 2 is block diagram showing the structure of the server computer 1 shown in FIG. 1;
FIG. 3 shows the personal information stored to the storage means shown in FIG. 2;
FIG. 4 shows the sales contract information stored to the storage means shown in FIG. 2;
FIG. 5 is a block diagram of a client computer shown in FIG. 1;
FIG. 6 is a flow chart used to describe an electric power marketing method according to a first embodiment of the present invention;
FIG. 7 is a flow chart of the operation shown as step ST2 in FIG. 6;
FIG. 8 is a flow chart of the operation shown as step ST4 in FIG. 6;
FIG. 9 shows an exemplary power consumption pattern input screen;
FIG. 10 shows a fee pattern selection screen;
FIG. 11 shows personal information in a second preferred embodiment of the present invention;
FIG. 12 is a flow chart used to describe an electric power marketing method according to a second embodiment of the present invention;
FIG. 13 is a flow chart of the operation shown as step ST32 in FIG. 12;
FIG. 14 shows a personal information input screen;
FIG. 15 shows sales contract information according to a second embodiment of the present invention;
FIG. 16 is a flow chart used to describe an electric power marketing method according to a third embodiment of the present invention;
FIG. 17 is a flow chart of the operation shown as step ST52 in FIG. 16;
FIG. 18 shows an electric power producer input screen;
FIG. 19 shows an electric power generating means input screen;
FIG. 20 is a flow chart used to describe an electric power marketing method according to a fourth embodiment of the present invention;
FIG. 21 is a public offering content input screen;
FIG. 22 is a public offering advertising screen; and
FIG. 23 is a public offering content searching screen.

### DESCRIPTION OF THE PREFERRED EMBODIMENTS

The preferred embodiments of the present invention are described below with reference to the accompanying figures.

### Embodiment 1

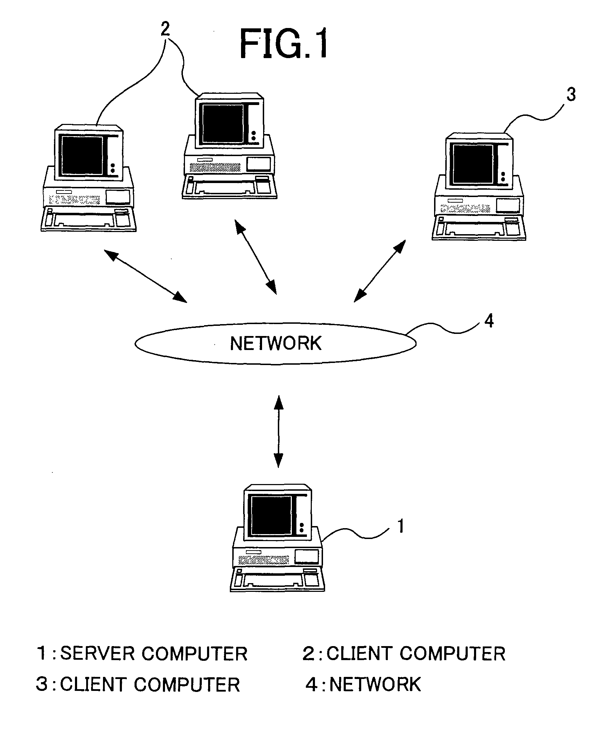

FIG. 1 shows the typical configuration of an electric power marketing system according to a first preferred embodiment of the present invention. As shown in FIG. 1 this electric power marketing system comprises a server computer 1 as the electric power marketing system of the invention, client computers 2 for electric power buyers, and client computer 3 for an electric power marketer. The server computer 1, buyer client computers 2, and marketer client computer 3 are connected to a network 4. The network 4 could be the Internet or other public line, a dedicated line, or a combination of these.

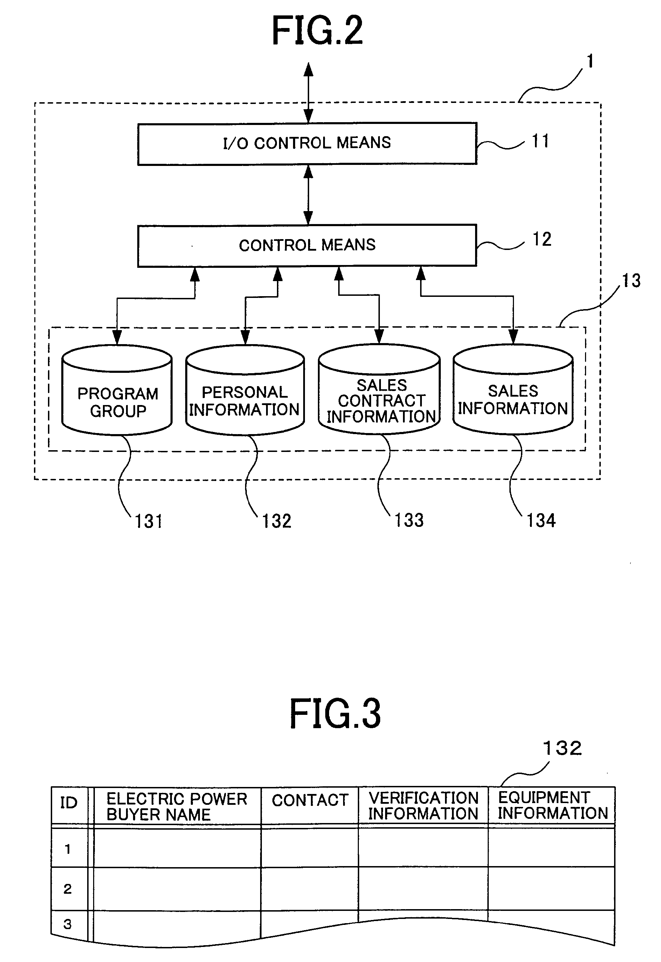

FIG. 2 is block diagram showing the structure of the server computer 1 shown in FIG. 1. As shown in FIG. 2 the server computer 1 comprises an input/output control means 11 for controlling data output to client computers 2, 3 and data input from client computers 2, 3 via the network 4. Control means 12 selects the required program and data from storage means 13 according to need, runs the program, and controls other parts of the server computer 1.

Storage means 13 stores program group 131 and various information. The program group 131 includes, for example, a sales menu screen generating program, a sales contract data accumulation program, and a power supply allocation program. The stored information includes personal information 132, sales contract information 133, sales information 134, and the like. It should be noted that the sales information 134 is the information used for generating the sales menu screen and the like.

FIG. 3 shows the personal information 132 stored to the storage means 13. As shown in FIG. 3, the personal information 132 includes information identifying the electric power buyer and information about the power consumption equipment of the electric power buyer. The information identifying the electric power buyer is particularly information for verifying the buyer, including the buyer's name and address or other contact information. If the electric power buyer is the user (consumer), information relating to the power consumption equipment of the user, such as when the equipment was purchased, when it was manufactured, demand load, and other equipment information can also be gathered.

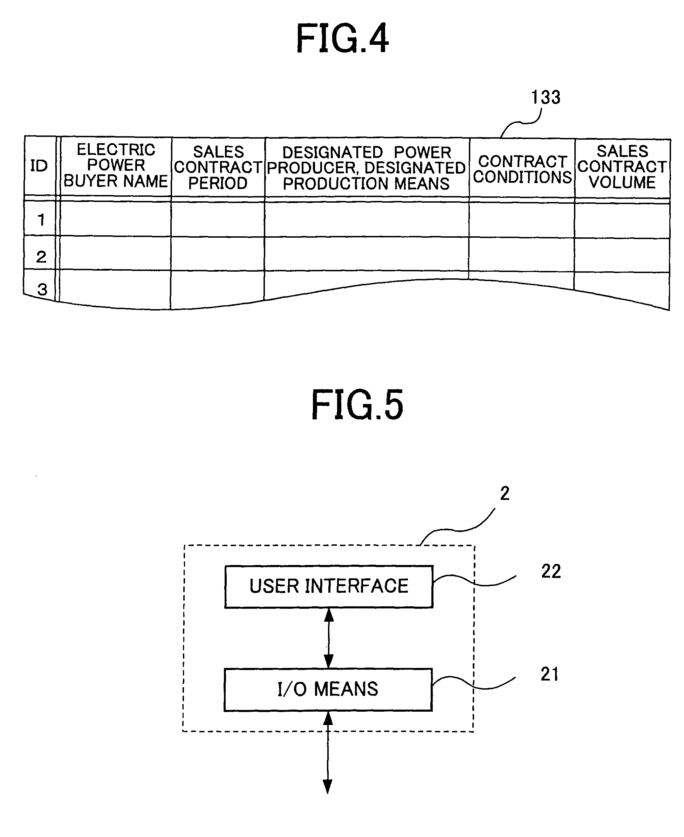

FIG. 4 shows the sales contract information 133 stored to the storage means 13. As shown in FIG. 4, the sales contract information 133 is information relating to the content of the sales contract and typically includes the name of the electric power buyer, the contract period, the designated power producer, the designated production means, contact conditions, and the amount of power to be purchased (the contract volume). The contract volume includes the power consumption patterns obtained from each of the electric power buyers, and the power consumption pattern contracts to purchase power required at a specific time. The power consumption pattern could, for example, contract to purchase power required at specific time periods (such as 30 kW/h from 1:00 to 10:00 and 100kW/h from 10:00 to 17:00), contract to purchase power required at specific time intervals (such as specifying how much power is contracted for each hour), or contract to purchase a specified volume continuously for a specified period of time (with the pattern expressed graphically or by mathematical function).

FIG. 5 is a block diagram of a client computer 2 or 3 shown in FIG. 1. As shown in FIG. 5, the client computer has an input/output means 21 for controlling data input from the network 4 and data output to the network 4, and a user interface 22. The user interface 22 is an output interface such as a browser screen or page menu for presenting necessary information on the display screen, an input interface having forms and buttons, for example, for inputting information, and the like.

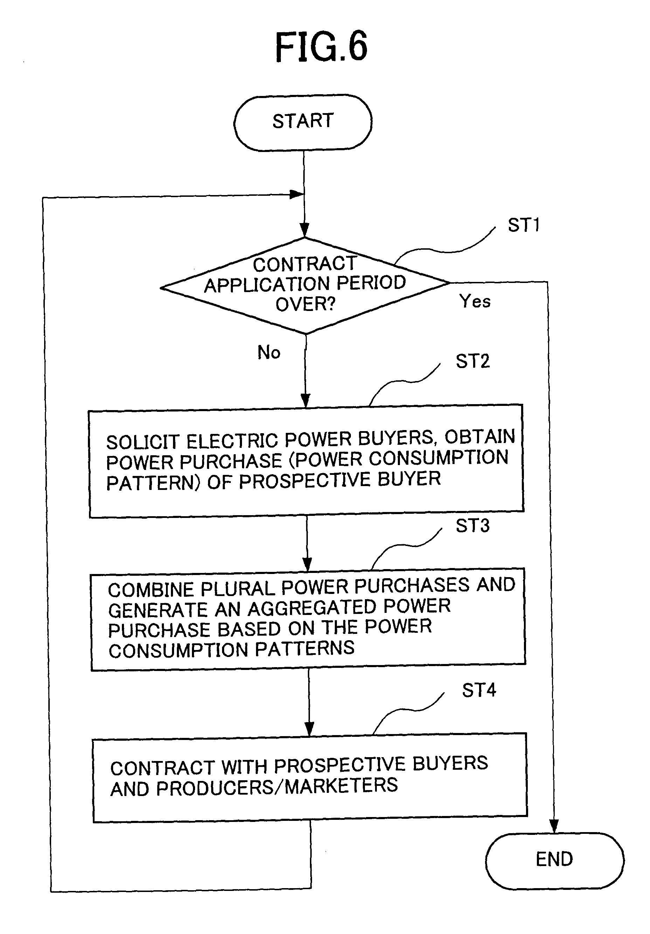

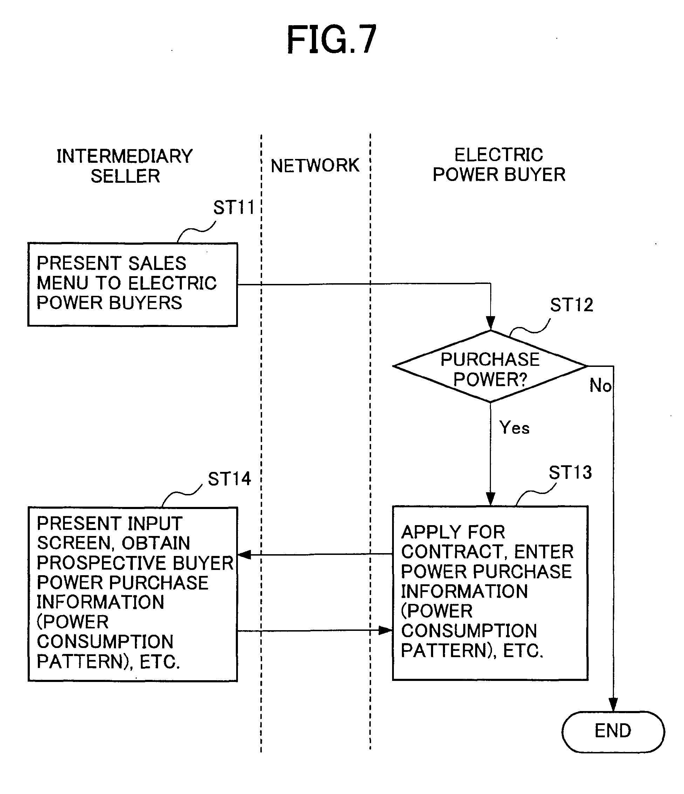

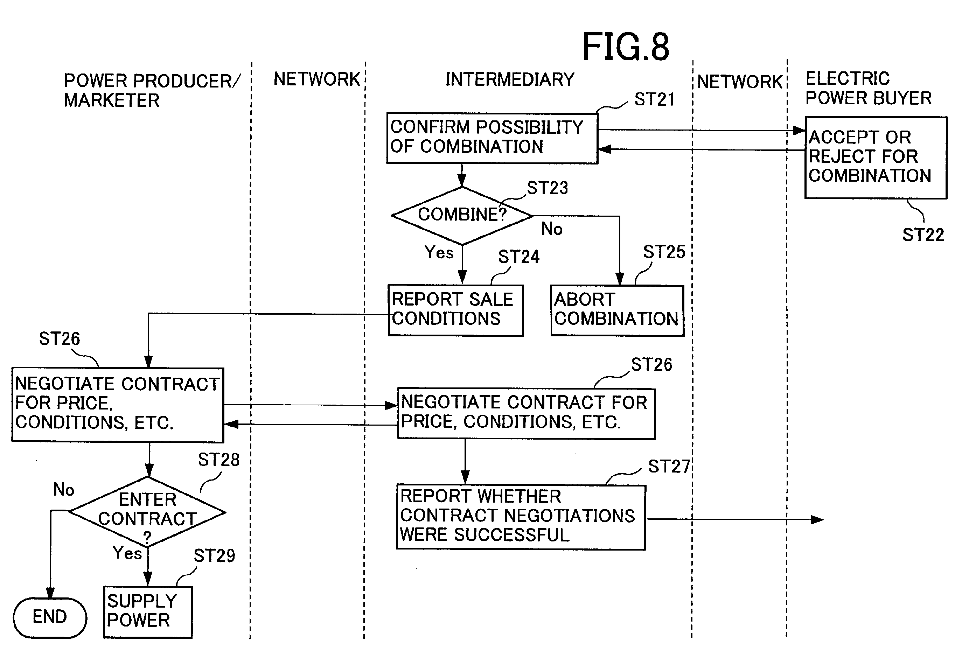

Operation of the electric power marketing system shown in FIG. 1 is described next below with reference to FIG. 6, a flow chart of an electric power marketing method according to this first embodiment of the present invention, FIG. 7, a flow chart of the operation shown as step ST2 in FIG. 6, and FIG. 8, a flow chart of the operation shown as step ST4 in FIG. 6.

Referring first to FIG. 6 the intermediary first determines whether the contract application period is over. If not, the procedure advances to step ST2. If the application period has ended, the process terminates immediately (ST1).

If the application period has not ended (ST1 returns no), the intermediary solicits electric power buyers and gathers the power purchasing needs, including the power consumption pattern, of the responding electric power buyer (ST2).

More specifically, as shown in FIG. 7, the intermediary first presents on the buyer client computer 2 a sales menu screen compiled based on the sales information 134 (see FIG. 2) stored to the storage means 13 (ST11). The electric power buyer then determines based on the presented information whether to purchase electric power (ST12). If the buyer decides to buy, control advances to ST13. If power is not to be purchased, the process ends.

If an electric power buyer decides to purchase electricity, the buyer negotiates a contract to purchase power with the intermediary and enters information relating to the power purchase (such as the power consumption pattern described above) to the server computer 1 (ST13, ST14). More specifically, the buyer sends an intent to purchase power to the server computer 1 by means of the sales menu screen, and the intermediary prompts the buyer to enter the power consumption pattern information.

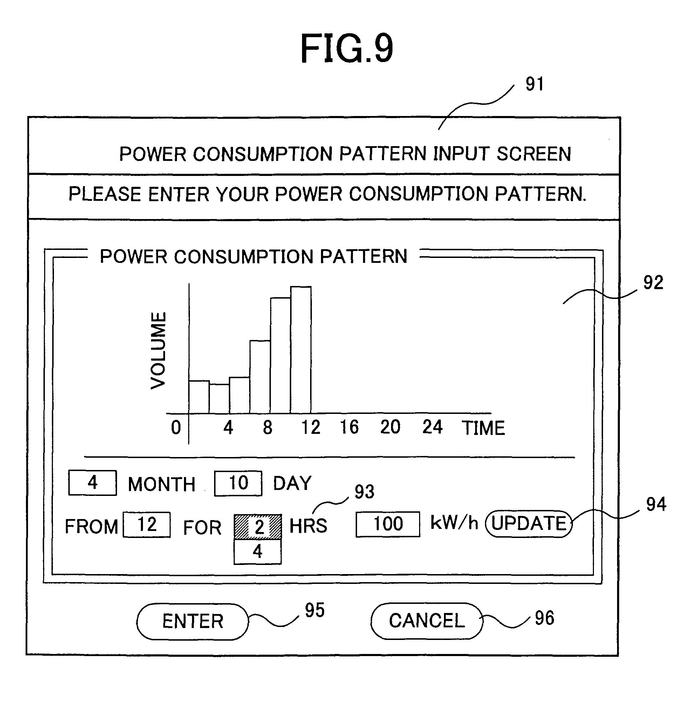

More specifically, the control means 12 creates a power consumption pattern input screen such as shown in FIG. 9 using the sales information 134 (see FIG. 2) and sales menu screen generating program stored to the program group 131 (FIG. 2), and presents this screen on the buyer client computer 2.

FIG. 9 shows an exemplary power consumption pattern input screen. Shown in FIG. 9 are the input screen 91, power consumption pattern display area 92 for showing an already entered power consumption pattern, power consumption input area 93, update button 94 for updating the power consumption pattern display, enter button 95 for saving the power consumption pattern, and cancel button 96 for canceling registration content. The time of day when power is required and power consumption are input to the power consumption input area 93.

When this screen is presented the buyer enters to power consumption input area 93 the date and time that power supply is desired, and the amount of power desired. The buyer then clicks the update button 94 to register the entered power purchase information and the power consumption pattern. To register an electric power purchase for a different time or day the buyer simply repeats data entry to the power consumption input area 93.

The buyer clicks on the enter button 95 to save the power consumption pattern registered by the buyer and close the input window. To cancel power purchase content, the buyer clicks on the cancel button 96 and ends the power consumption pattern input process. The information registered as described above is stored as sales contract information 133 to storage means 13 (FIG. 2). It will be apparent to one with ordinary skill in the related art that after data is entered and registered a registration window showing the registered content can be presented so that the electric power buyer can reconfirm the registered purchase content.

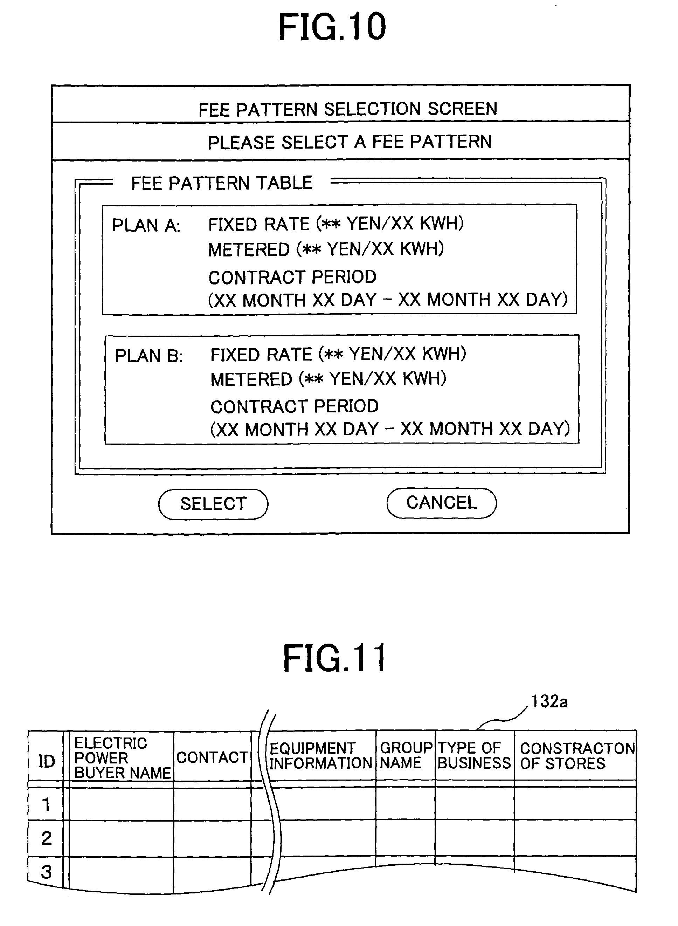

A fee pattern selection screen as shown in FIG. 10 is also displayed for the electric power buyer to enter a purchase price by selecting a fee pattern from a list of available options. While the fee patterns are categorized by combinations of sales periods and fixed fee or metered fee, the invention will apparently not be limited to these combinations.

An electric power buyer that has already completed a contract can also confirm the contract content within the contract period after the contract is completed. That is, an electric power buyer that has already completed a contract that has not expired can request the server computer 1 to display the contract information. The server computer 1 can then determine whether the buyer is a contractor that can view contract information. If the buyer is an authorized contractor, the server computer 1 finds the requested sales contract information 133 and presents it on screen.

Furthermore, the electric power buyer can also change or cancel a contract after the contact is made. In this case, too, the buyer requests the server computer 1 to present the contract information and the server computer 1 then searches the sales contract information 133 and presents it. The buyer then edits the sales contract information 133 to change, or cancels it. The server computer 1 thus obtains the information to change or delete, and based on this information changes or deletes the contract content by editing the information stored to the above noted storage means.

It should be noted that the sales contract information 133 can be presented by displaying it on a display viewed by the electric power buyer, or sending the information to a telephone number, e-mail address, or other point of contact.

Referring again to FIG. 6, power purchases from a plurality of electric power buyers are combined based on the power consumption pattern information obtained in ST2 to create an aggregated power purchase with high added value (ST3). What is important to note here is that the power consumption patterns are combined so that the aggregate power purchase creates high added value for the marketer.

Power patterns offering high added value for the marketer are patterns that, for example, have level daily consumption (that is, the day-night difference in demand is low), have level consumption day to day (that is, the difference in demand from day to day varies little), or have peak demand in low consumption time bands (such as in the morning and from late night to dawn).

A level daily consumption pattern can be created by, for example, combining electric power purchases of nighttime users, that is, users whose power demand peaks at night, with daytime users, that is, users whose peak demand is during the day, based on their respective power consumption pattern information.

A pattern with level day-to-day consumption can be similarly created by combining electric power purchases of weekday users, that is, users whose peak power consumption is on weekdays, with weekend users, that is, users whose peak power consumption is on weekends and holidays, based on their respective power consumption pattern information.

Level daily consumption patterns and level day-to-day consumption patterns mean that the difference in demand for electricity changes little according to the time of day or day of the week. The power producers therefore do not need to start and stop generating capacity or adjust the operating rate. Generating facilities can therefore be operated more efficiently, and the electric power marketing method of our invention thus provides high added value for the power marketer.

The method of our invention appropriately combines information received from an electricity buyer with previously stored information to create combinations such as described above. This "previously stored information" refers particularly to buyer information that has not yet been combined with other buyer information. Consumption patterns with even higher added value can be created by combining demand from a large number of users, and the combinations can be optimized.

It will be apparent to one with ordinary skill in the related art that while information received from a buyer is combined with accumulated information above, the invention shall not be so limited. It is also possible, for example, to first obtain information from a number of plural users, and then combine information from the plural buyers to create demand patterns as described above.

After creating an aggregated power purchase (of purchases the hour if the contract is by the hour, for example) with high added value as described in ST3, the intermediary determines the price for the aggregated power purchase, then contracts with the electric power buyers and contracts with the power producer to purchase the aggregated power (ST4). It will be apparent to one with ordinary skill in the related art that while the price for the aggregate power purchase is here determined after the demand combinations are created, it is also possible to set the price for the aggregate power purchase before the combinations are generated.

More specifically, as shown in FIG. 8, the electric power buyer is queried whether the created aggregate power purchase is an appropriate combination of power purchase requests (ST21). The electric power buyer then replies to the intermediary whether it is acceptable or not (ST22). If the answer is yes, the intermediary informs the marketer of the conditions for selling the aggregated purchased power (ST24).

If the intermediary has already determined the marketer from which the purchase will be made, the intermediary needs only to inform the marketer of the sale conditions. Otherwise the intermediary publishes the sale conditions on the network, for example, to solicit offers from other marketers or intermediaries wanting to make a sale. On the other hand, if the electric power buyers report disagreement with the offered combination, a new combination aggregating different power purchase requests is created (ST25).

After responses are received from each of the buyers, each buyer is notified whether the combination can be completed. If the combination could not be completed, the received information is added to the accumulated information.

When the intermediary reports the sale conditions, the marketer and intermediary negotiate a price and conditions (ST26). If negotiations are successful (ST28), the party that secured the supply contract (which is ultimately the producer) becomes responsible for supplying to the buyer the contracted power on the contracted day, and supplies the power to each of the buyers (ST29). The intermediary also reports the results of the contact negotiations to the buyers (ST27). Note that the actual sale is accomplished by the electricity producer delivering power to the transmission grid and collecting the commensurate fee from the intermediary.

It will be apparent to one with ordinary skill in the related art that while the power consumption pattern information is manually input, specifically by the buyer entering the data over the Internet, in the above example, the invention shall not be so limited. It is also possible, for example, to record the data from electric meters installed at the buyer's home, for example, and project power demand based on the automatically metered results from a period of time or based on the same conditions (season, time, weather, for example) in the past.

Furthermore, while the time is set to two-hour increments in the example shown in FIG. 9, the actual unit depends on the type of contract. Other units, such as 30 minutes increments or one-day increments, can apparently be used. Furthermore, while the time span is entered in FIG. 5 by inputting a power demand starting time and number of hours, it is alternatively possible to input the start and end times of power demand.

It will also be noted that the electric power buyers individually contact with the intermediary in the above example, but the invention shall not be so limited. For example, a number of buyers could combine their power purchases and contract jointly with the intermediary to buy their electricity.

As described above, this exemplary electric power marketing method of the present invention solicits plural electric power buyers via a network and obtains information relating to the power purchases of the buyers, combines the power purchases of the plural buyers based on the information relating to the power purchase, and creates an aggregated power purchase of high added value for the marketer. It is therefore possible to gather from an undetermined large number of buyers information relating to the desired purchases and the individual buyers, and based on this information create an aggregated power purchase that gives the intermediary the ability to negotiate with the electricity producer or seller from a position of strength. The intermediary can thus purchase power from the marketer advantageously with respect to price, that is, cheaply.

Furthermore, because the information relating to power purchases is the buyers' power consumption pattern, and an aggregated power purchase is created at the power purchase generation stage so that the demand pattern of the aggregate power purchase is a demand pattern that offers the marketer high added value, aggregated power purchases that are not only high in volume but are also substantially level (change little day to day), power purchases offering added value in various ways can be created. The intermediary thus has a stronger negotiating position vis-a-vis the electricity producer.

This embodiment of the present invention further enables an electric power buyer that has completed a contract that has not yet expired to confirm the sales contract at any time. The buyers can therefore know immediately what type of sales contracts have been joined to date. For example, the buyer can confirm whether the necessary power has been contracted for before the contract application deadline (such as the day before). Furthermore, because contract conditions can also be changed, the buyer can easily change or cancel a contract even after a purchase contract has been joined.

### Embodiment 2

With the electric power marketing method according to the above first embodiment, the intermediary obtains power consumption patterns from each electric power buyer. With the electric power marketing method according to this second embodiment, however, the intermediary obtains personal information, such as the type of business or store information, from each buyer, and generates the aggregate power purchases based on this personal information.

Other than obtaining personal information from each buyer and generating aggregated power purchases based on this personal information, the electric power marketing system used in the electric power marketing method according to this second embodiment is the same as that of the first embodiment above. The following description of this second embodiment therefore focuses on the difference between the second embodiment and the first embodiment.

FIG. 11 shows the personal information 132a stored to storage means 13 of server computer 1 in an electric power marketing system according to this second embodiment. As shown in this figure, personal information 132a in this embodiment includes, in addition to the personal information 132 gathered in the first embodiment, the name of the group to which the buyer belongs, type of business, and information about the stores when the buyer has one or more stores.

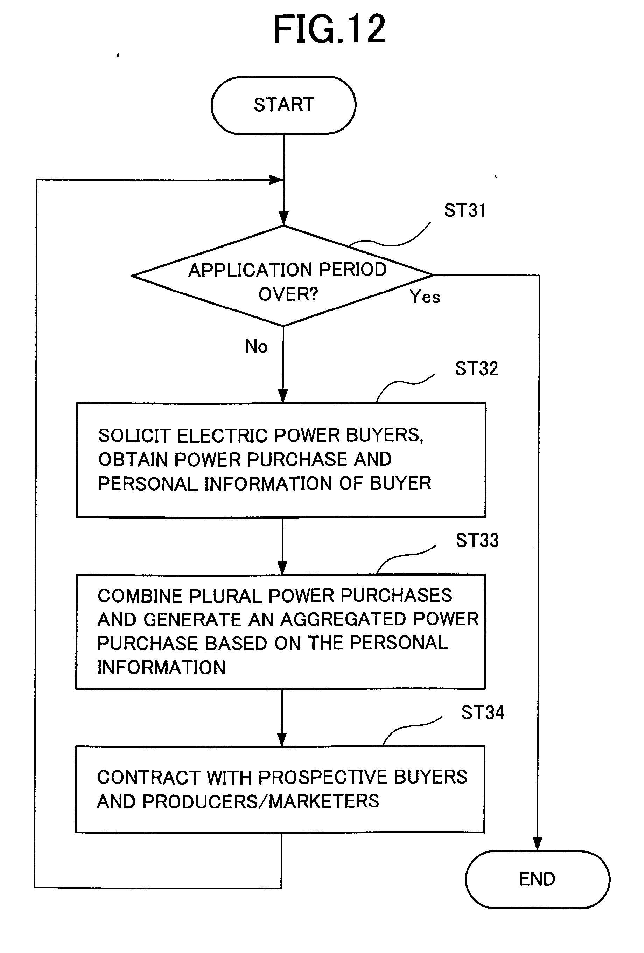

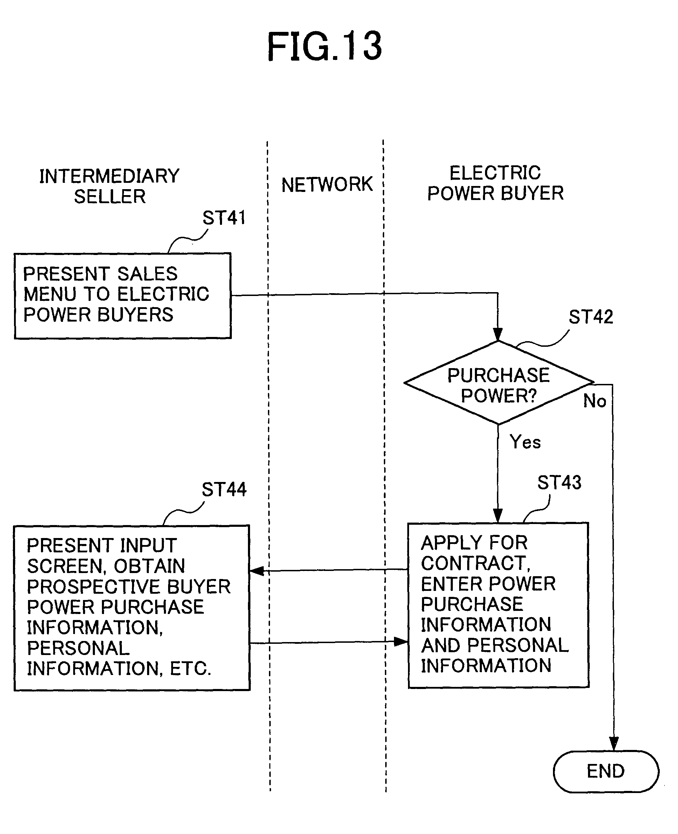

Operation of the electric power marketing system according to this second embodiment is described next below. FIG. 12 is a flow chart of the electric power marketing method according to this embodiment, and FIG. 13 is a flow chart of the operation in step ST32 in FIG. 12. It should be noted that steps ST31 and ST34 in FIG. 12 are identical to steps ST1 and ST4 in FIG. 6, and steps ST41 and ST42 in FIG. 13 are identical to steps ST11 and ST12 in FIG. 7, and further description thereof is thus omitted below.

Referring first to FIG. 12, if the contract application period has not ended (ST31), the intermediary solicits electric power buyers and gathers their power purchasing needs, including the personal information of the responding electric power buyer (ST32). Note that this personal information refers to the type of business, store information, and the like.

If the buyer decides to purchase power, the buyer negotiates a contract to purchase power with the intermediary as shown in FIG. 13, and enters information relating to the power purchase (including a contract application, power to purchase, and personal information) to the server computer 1 (ST43, ST44). More specifically, the buyer sends an intent to purchase power to the server computer 1 by means of the sales menu screen, and the intermediary prompts the buyer to enter the personal information.

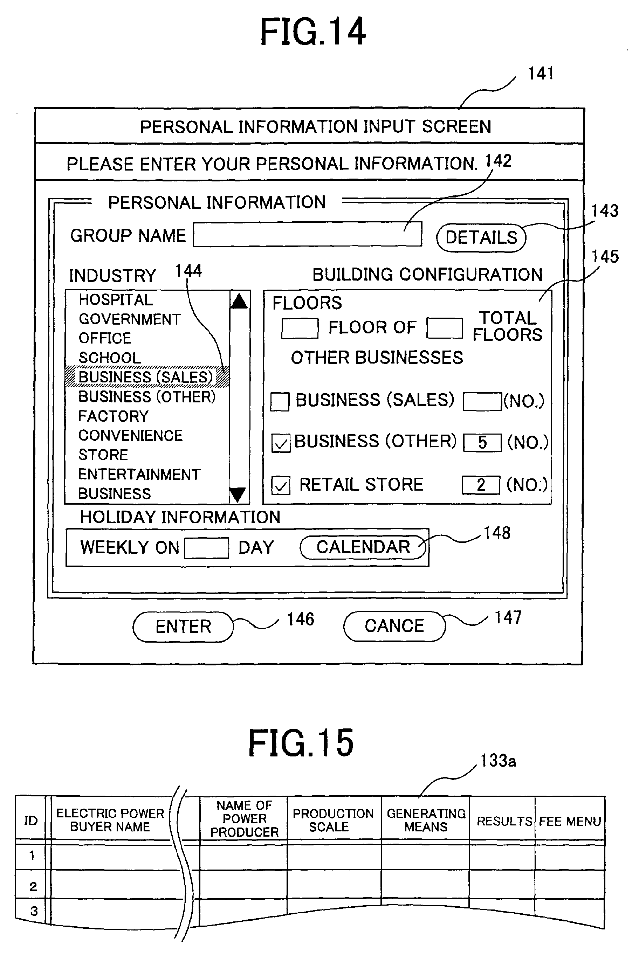

More specifically, the control means 12 creates a personal information input screen such as shown in FIG. 14 using the sales information 134 (see FIG. 2) and personal information input screen generating program stored to the program group 131 (FIG. 2), and presents this screen on the buyer client computer 2.

FIG. 14 shows a personal information input screen. Shown in FIG. 14 are the input screen 141, group name input area 142 for entering the name of the buyer, a details button 143, a buyer's industry category selection area 144, a building configuration input area 145, an enter button 146, cancel button 147, and holiday information input area 148. Note that the details button 143 calls up a screen for inputting detailed information about the buyer. When the buyer is a group, assumed below to be a store, occupying space in a building, the configuration of the stores in the building is entered to building configuration input area 145. Information about the days the store is closed, including periodic holidays and special holidays, is entered to the holiday information input area 148. Note that a calendar can be displayed to assist data entry.

When this screen is displayed the buyer enters the buyer's name to group name input area 142, clicks on details button 143, and enters detailed personal information (such as address, name of person responsible, telephone number or other contact). Next, the buyer's industry category (such as hospital or government office in FIG. 13) is selected from buyer's industry category selection area 144. It should be noted that while the industry categories shown in this example have a characteristic power consumption pattern and thus enable the buyer's basic power consumption pattern to be predicted, other classification methods could be used.

If the buyer is located in a building having multiple occupants, information about the building is entered to building configuration input area 145. This information includes, for example, floor information such as on what floor of how many floors in the building the buyer is located, and how many other establishments, such as companies and offices, are in the building. As with the industry category information, different types of businesses have characteristic power consumption patterns and this information makes it possible to predict the power consumption pattern. The content entered shall not, however, be limited to that described above. The enter button 146 is clicked to register the input data and close the input screen. To cancel the input data the cancel button 147 is pressed and the process for this screen ends.

Referring again to FIG. 12, after obtaining the personal information in ST32, power purchases from a plurality of electric power buyers are combined based on the supplied personal information to create an aggregated power purchase with high added value (ST33). What is important to note here is that the power consumption patterns are combined so that the aggregated power purchase creates high added value for the marketer. In addition, high added value power consumption patterns are power consumption patterns as described in the first embodiment.

A level daily consumption pattern can be created in this case by, for example, combining electric power purchases of nighttime users whose power demand peaks at night, with daytime users whose peak demand is during the day, based on their industry categories and other information. Examples of nighttime users include buildings occupied by bars, restaurants, and other businesses that are open from evening to late night or early morning, and stadiums where night games are played. Examples of daytime users include buildings occupied by stores and businesses such as department stores and supermarkets that are open during the day.

A pattern with level day-to-day consumption can be similarly created by combining electric power purchases of weekday users whose peak power consumption is on weekdays, with weekend users whose peak power consumption is on weekends and holidays, based on their supplied holiday information and store information. Examples of weekday users include office buildings, government buildings, schools, stores and other establishments that are closed according to the calendar. Examples of holiday users include department stores, supermarkets and other retail establishments, as well as amusement parts, racetracks, and other entertainment businesses that are typically open on weekends and holidays. Level day-to-day consumption patterns can also be achieved by incorporating buyers, such as beauty shops, barbers, and department stores that close on other regularly scheduled days other than weekends.

After thus creating high added value power consumption patterns, the intermediary negotiates a contract with a marketer in ST44 in the same way as in step ST4 in the first embodiment.

In this embodiment of the invention the information relating to as power purchase is personal information, such as the industry or type of establishment that the buyer is, and the aggregated power purchases that are generated based on this personal information are generated so that the aggregated power purchase offers high added value for the marketer. Aggregated power purchases are thus created so that the contract offers high added value for the marketer by leveling demand from day to day rather than simply aggregating demand for a high volume of power. The intermediary is thus better able to negotiate with the electricity producer or seller from a position of strength.

In addition, the buyer does not need to directly enter the buyer's power consumption pattern, but can simply enter such easily input information as the industry category, type of business establishment, and other so-called personal information. Specifying contract terms is thus easier for the buyer.

It will be apparent to one with ordinary skill in the related art that while this embodiments is described generating aggregated power purchases based on the personal information, the buyer's power consumption pattern could be generated from the personal information, and the aggregated power purchase then generated based on these power consumption patterns.

### Embodiment 3

In a third embodiment of the invention the intermediary presents for the electric power buyer a selection of marketers, generating means, and the like and obtains from the buyer information indicative of the buyer's desired marketer (supplier) or generating means. Electric power purchases of buyers expressing a desire for the same supplier or the same producer are then combined to create an aggregated power purchase.

Other than obtaining the desired marketer (supplier) or generating means from the electric power buyers and grouping buyers desiring the same supplier or the same producer to create an aggregated power purchase, an electric power marketing method according to this third embodiment of the invention is the same as the first embodiment above. The following description of this third embodiment therefore focuses on the difference between the third embodiment and the first embodiment.

FIG. 15 shows the sales contract information 133a stored to the storage means 13 of the server computer 1 in an electric power marketing method according to this third embodiment. As shown in this figure, sales contract information 133a in this embodiment stores, in addition to the sales contract information 133 gathered in the first embodiment, the name of an electrical power producer, the scale of the generating facility, generating means, business results, fee menu, and other information.

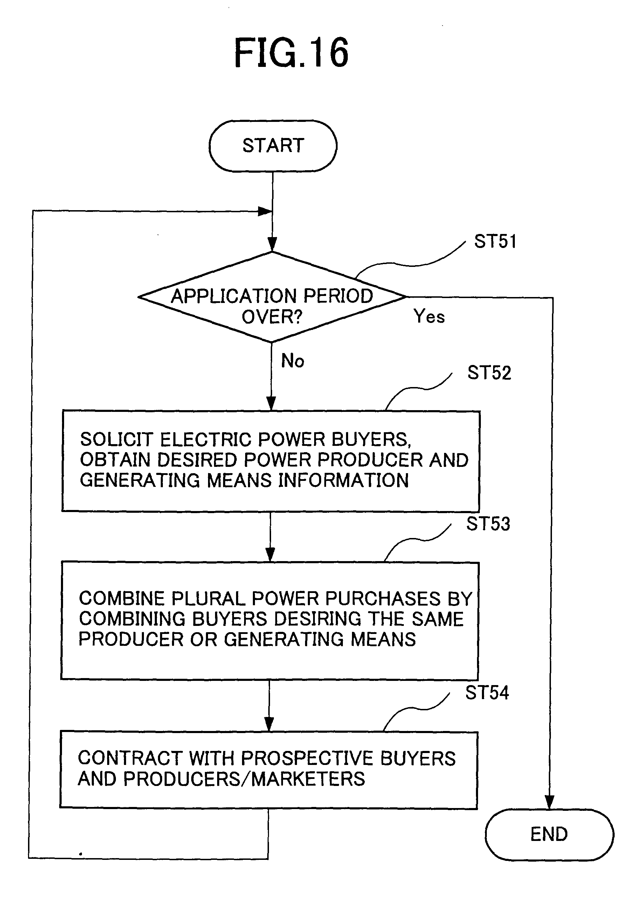

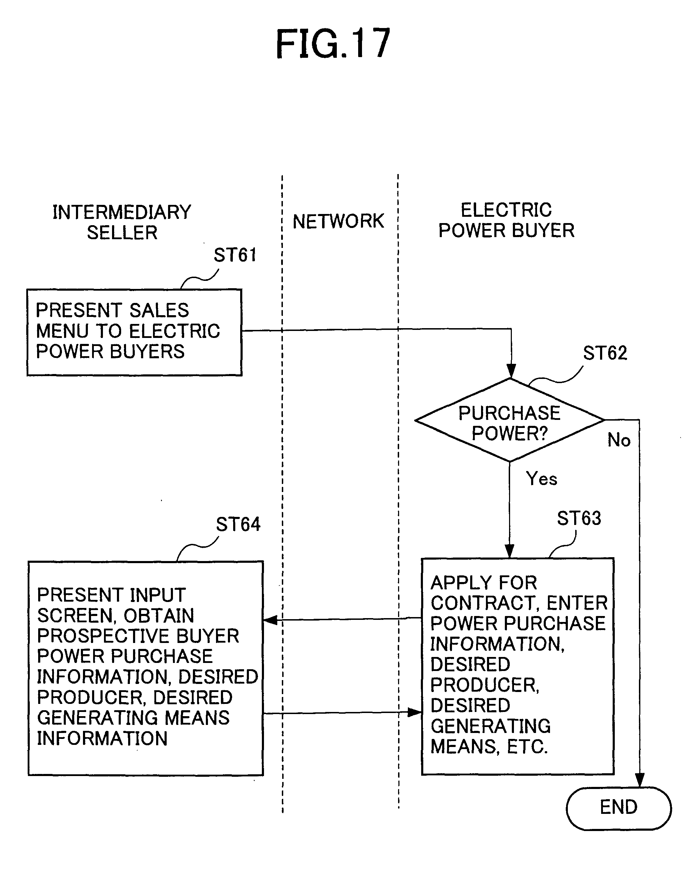

An electric power marketing method according to this third embodiment is described next below. FIG. 16 is a flow chart used to describe an electric power marketing method according to this third embodiment of the present invention, and FIG. 17 is a flow chart of the operation shown as step ST52 in FIG. 16. It should be noted that steps ST51 and ST54 in FIG. 16 are identical to steps ST1 and ST4 in FIG. 6, and steps ST61 and ST62 in FIG. 17 are identical to steps ST11 and ST12 in FIG. 7, and further description thereof is thus omitted below.

Referring first to FIG. 16, if the contract application period has not ended (ST51), the intermediary solicits electric power buyers and gathers the power purchasing need information, including desired marketer (supplier) and generating means information, from responding potential buyers (ST52).

If the buyer decides to purchase power, the buyer negotiates a contract to purchase power with the intermediary as shown in FIG. 17, and enters information relating to the power purchase (including a contract application, power to purchase, and desired supplier and generating means information) to the server computer 1 (ST63, ST64). More specifically, the buyer sends an intent to purchase power to the server computer 1 by means of the sales menu screen, and the intermediary prompts the buyer to enter the desired supplier and generating means information.

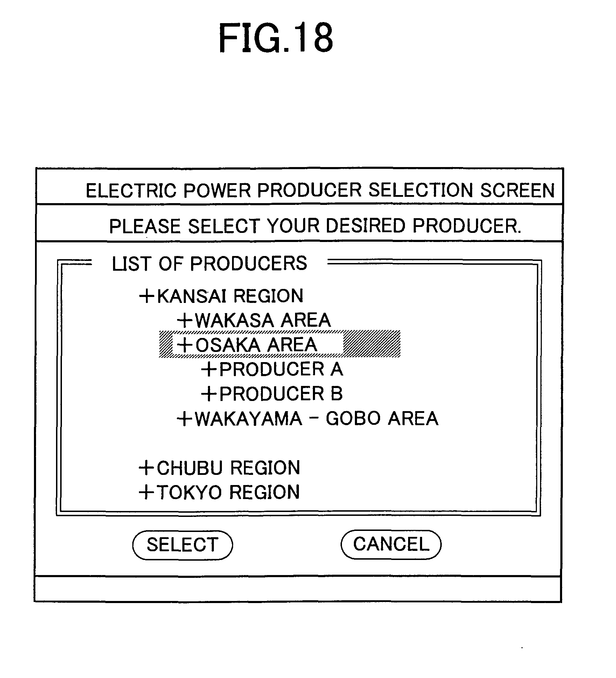

More specifically, to prompt the user to enter the desired producer, the control means 12 creates a desired producer input screen such as shown in FIG. 18 using information relating to the available producers and a desired producer input screen generating program stored to the program group 131 (FIG. 2), and presents this screen on the buyer client computer 2.

When this screen is displayed, the electric power buyer selects a region (such as the Kansai and Chubu regions in Japan as shown in FIG. 18) and local area within the region (such as Osaka and Wakasa in FIG. 18) displayed in the list of producers, and selects a producer within the selected area.

It will be apparent to one with ordinary skill in the related art that while the producers are grouped by region and local area to make it easier for the buyer to select a desired producer from among plural producers, the invention shall not be limited and other grouping methods can be used. The select button is clicked to register the desired producer selection and close the producer selection window. A cancel button is clicked to cancel the selection and end this process.

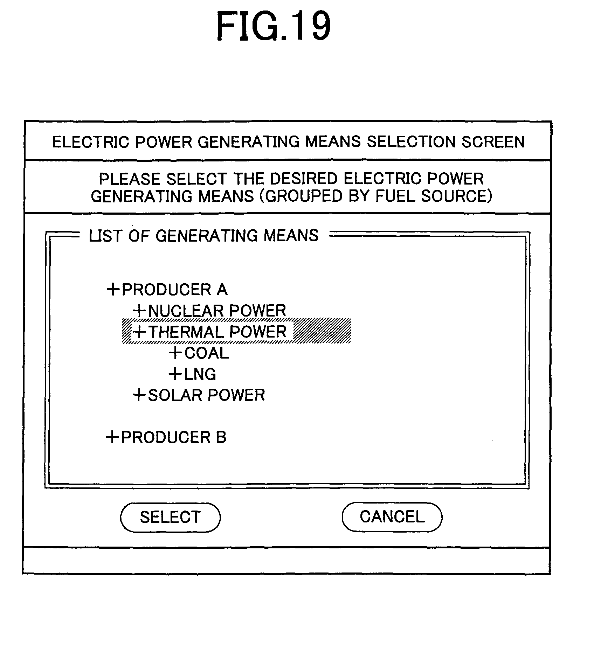

To prompt the user to select a desired type of generating facility, the control means 12 creates a generating means selection screen as shown in FIG. 19 and displays it on the buyer client computer 2 using information relating to the available selection of power generating means and a sales menu screen generating program stored'to the program group 131.

When this window is presented the buyer selects the type of power generating facility (such as nuclear power plant, thermal, or wind) displayed in a list, and then selects the desired type of fuel (such as coal or LNG). It will be apparent to one with ordinary skill in the related art that while generating means are categorized by production method and fuel type in this embodiment, the invention shall not be so limited. The select button is clicked to register the desired generating means selection and close the window. A cancel button is clicked to cancel the selection and end this process.

Referring again to FIG. 16, after obtaining the desired producer (marketer) and generating means in ST52, power purchases from a plurality of electric power buyers desiring the same producer or same generating means are combined to create an aggregated power purchase with high added value (ST53). As in the first and second embodiments, power consumption patterns are combined so that the aggregated power purchase creates high added value for the marketer. For example, purchases by plural buyers wanting power produced by a nuclear power plant are combined to create an aggregated power purchase with level demand, optimizing the combinations so that demand varies little from day to day.

Using power consumption patterns and information about the producers and generating means, electric power purchases of buyers specifying a particular producer (or power plant), or buyers specifying a particular type of generating means, could also be combined. This creates high added value for the producer because a large volume of demand can be assured. This is particularly advantageous for purchasing green energy, which is generally relatively expensive, by aggregating demand from numerous users so that the intermediary can better negotiate with the producer for a lower price.

Producer information as used herein includes, in addition to the producer's name, information about the producer's maximum generating capacity and generating equipment. Power plant information includes the name of the power plant as well as the maximum generating capacity and type of generating means used. Information about the maximum generating capacity and generating equipment is particularly important because it is meaningless to create an aggregated power purchase exceeding the generating capacity of the producer, and this information can be used to determine how much demand can be combined in a single purchasing contract.

Furthermore, by aggregating blue chip companies or growth companies, or buildings housing such companies, or commercial buildings attracting large numbers of customers, aggregated power purchases can be created that enable the producer to plan for large volume, long term, stable demand. Information used in this method can be gathered from surveys based on electric power buyer profiles, corporate information, and other outside sources.

After thus creating high added value power consumption patterns, the intermediary negotiates a contract with a marketer in ST54 in the same way as in step ST4 in the first embodiment.

In this embodiment of the invention the information relating to as power purchase is information relating to the producer or generating means desired by the buyer. Aggregated power purchases are then generated by combining electric power purchases of buyers wanting the same producer or type of generating means. A wide range of information, such the content desired by the buyer and information relating to the buyer, can thus be collected. This information can then be used to, for example, combine power purchases from buyers wanting green energy so that the aggregated power purchase offers high added value for the marketer. Aggregated power purchases are thus created so that the contract offers high added value for the marketer, and the intermediary is thus able to negotiate with the electricity producer or seller from a position of strength. The intermediary can thus purchase power from the marketer advantageously with respect to price, that is, cheaply.

### Embodiment 4

A fourth embodiment of the present invention presents possible conditions for combining power purchases when an appropriate match (other buyer) cannot be found, solicits electric power buyers meeting the conditions, and combines electric power purchases of buyers responding to the solicitation.

Other than displaying conditions for a combination if an appropriate match cannot be found in step ST3 in FIG. 6, soliciting electric power buyers meeting the conditions, and combining electric power purchases of buyers responding to the solicitation, this fourth embodiment of the invention is the same as any of the preceding first to third embodiments, and further description of like parts is omitted below.

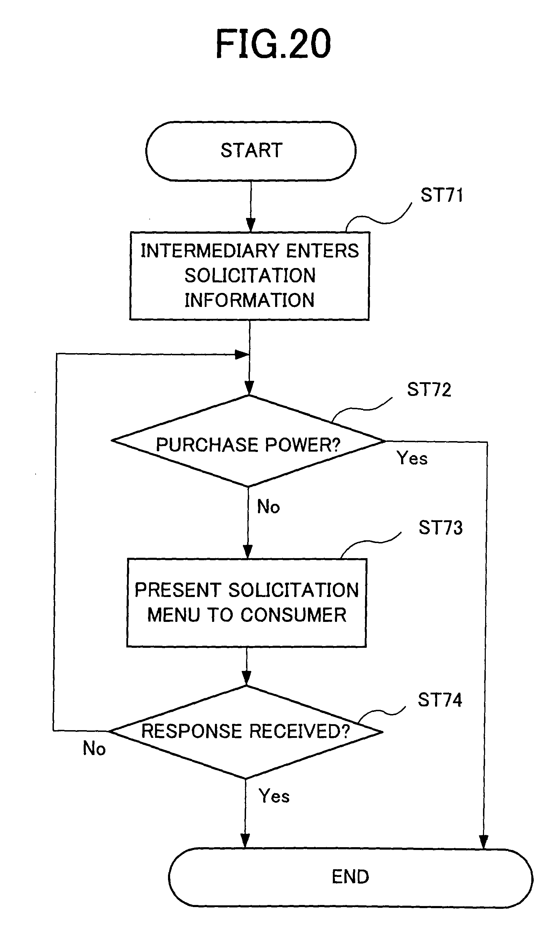

FIG. 20 is a flow chart used to describe the electric power marketing method of this fourth embodiment. The process shown in FIG. 20 is accomplished when an appropriate match cannot be found in step ST3 in FIG. 6.

When an appropriate match cannot be found in step ST3 in FIG. 6, the intermediary decides the content of the public solicitation (conditions for responding) (step ST71 in FIG. 20). The solicitation could specify, for example, a particular producer, generating means, power consumption pattern, or personal information such as holidays, type of industry, and the like. Note that the intermediary can input the solicitation content at any time.

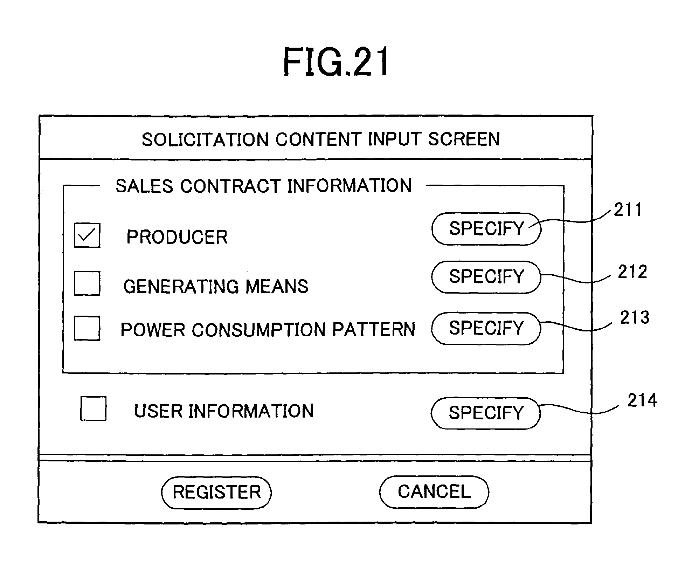

The solicitation is prepared by entering the specific information to the solicitation-input screen as shown in FIG. 21. That is, to solicit buyers specifying a particular power producer, the button 211 shown in FIG. 21 for specifying the producer is clicked to call the producer input screen shown in FIG. 18, and the specific producer is entered.

If the intermediary wants to solicit buyers specifying a particular generating means, buyers having a particular type of power consumption pattern, or buyers having holidays on particular days or particular business establishment characteristics, buttons 212, 213, or 214 in FIG. 21 can be clicked to present a generating means input screen, power consumption pattern input screen, or personal information input screen as shown in FIG. 19, FIG. 9, or FIG. 14. The intermediary can then enter the specific producer, power consumption pattern, or personal information from the displayed screen and create the solicitation content.

After creating the solicitation content containing the sale conditions, it is determined if the contract application period has ended. If not, the procedure advances to step ST73; otherwise the process ends (ST72).

If the contract application period has not ended, the intermediary displays a list of solicitation content for the electric power buyers (ST73). Whether any buyers respond to the solicitation is then detected (ST74). If there are responding buyers, a process is performed for announcing the end of the solicitation, selecting the winning buyers and notifying the losing buyers if there are numerous respondents, and reporting the sale conditions to the producer or other intermediary. The procedure then advances to ST4 in FIG. 6. If no buyers respond to the solicitation, the above process is repeated until the application period ends. The intermediary can input solicitation content at any time during this process.

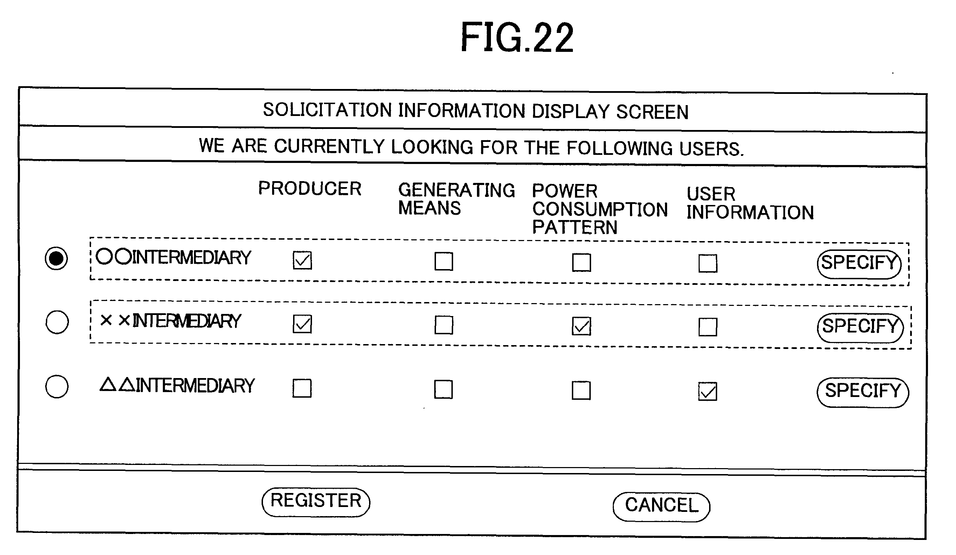

Buyers are solicited by presenting to prospective buyers a solicitation screen such as shown in FIG. 22 based on the information entered to the screen shown in FIG. 21. Potential buyers can then confirm the specifics of the solicitation from this screen. That is, buyers can check specific contract conditions (the producer, generating means, power consumption pattern, personal information, other), and confirm what items are specified as conditions for the sale.

It should be noted that while only items defined as sale conditions are shown in FIG. 22, the actual solicitation screen enables the solicitation conditions to be confirmed in greater detail using screens showing the specified producer, specified producer and power consumption pattern, and other particulars in detail.

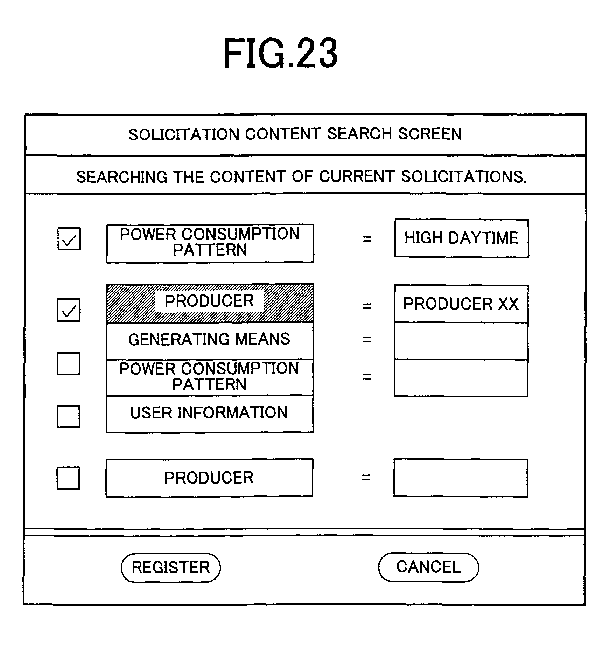

If there are numerous sale conditions, the content of the solicitation is preferably first narrowed. Content can be narrowed by, for example, displaying a search screen such as shown in FIG. 23 so that buyers can search for certain conditions, or by having the buyer first enter the desired sale conditions and searching automatically for a solicitation matching the conditions desired by the buyer.

The intermediary displays a solicitation screen on the buyer client computer 2 to solicit particular buyers as described above in this fourth embodiment. Other methods can also be used as described below, however. In addition, a plural number of these solicitation methods could also be used.

One method is to search for buyers potentially matching the desired combination from a database storing information about past buyers and information about their past purchases (such as their power consumption pattern). The buyer could then be contacted by telephone, fax, e-mail, informing the buyer of the price advantage and prompting the buyer to enter a contract.

A database of typical power consumption patterns arranged by industry type could also be searched to find an industry category matching the needed power consumption pattern, or an industry category matching a particular power consumption pattern or a power consumption pattern having a business scale matching a particular demand scale could be projected from a telephone database (such as a telephone book) or map database. The identified potential buyers can then be notified of the price advantage and prompted to enter a contract.

If the sale conditions are particularly stringent, compensation could be provided to buyers responding to the solicitation. Even though the solicitation conditions are stringent, this method can increase the hit ratio of responding buyers, making it easier to create a suitable combination.

It is also possible to determine the sale conditions in advance, display these sale conditions, and solicit electric power buyers meeting the sale conditions. In this case it is possible to gather only buyers required for a combination, and makes it possible to easily create a high added value aggregated power purchase.

When a buyer suitable for creating a particular aggregated power purchase is not initially found, an intermediary can find the needed electric power buyers and create a higher added value aggregated power purchase using this fourth embodiment of the present invention because the conditions required to achieve a particular combination are presented to solicit electric power buyers satisfying the conditions, and the power purchases of buyers responding to the solicitation can then be combined to complete a high added value aggregated power purchase.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. An electric power marketing method using a computer system, comprising:
a step for displaying a marketing menu screen via a network to solicit plural electric power buyers;
a step for gathering information relating to electric power purchases by the plural electric power buyers;
an electric power purchase compiling step for combining electric power purchases by the plural electric power buyers based on information relating to their individual electric power purchases to compile an aggregated electric power purchase with high added value for a marketer; and
a step for contracting with the marketer to complete the aggregated electric power purchase.

2. The electric power marketing method as described in claim 1, wherein the information relating to electric power purchases is an electric power consumption pattern or personal information of the electric power buyer, and
the electric power purchase compiling step creates an aggregated electric power purchase so that the aggregated electric power purchase provides high added value for the marketer.

3. The electric power marketing method as described in claim 1, wherein the information relating to electric power purchases is information relating to an electric power producer or electric power generating means desired by the electric power buyer; and
the electric power purchase compiling step creates an aggregated electric power purchase by combining electric power purchases of buyers desiring the same electric power producer or the same electric power generating means.

4. The electric power marketing method as described in claim 1, wherein when electric power purchases of the buyer to be combined is not found, combinable conditions are displayed to solicit an electric power buyer satisfying said conditions, and electric power purchases by electric power buyers responding to the solicitation are combined.

5. The electric power marketing method as described in claim 1, further comprising a step for entering a contract with each electric power buyer relating to an electric power purchase by said buyer and storing contract conditions in a storage means; and
a step for changing contract conditions stored to said storage means in response to a request from the electric power buyer to change the contract.

6. An electric power marketing method using a computer system, comprising:
a step for displaying a marketing menu screen via a network to solicit plural electric power buyers;
a step for gathering electric power consumption pattern information or personal information for the plural electric power buyers;
a step for combining electric power purchases by plural electric power buyers based on the information relating to each electric power purchase so as to create an aggregated electric power purchase having an electric power consumption pattern having little difference in demand by hour for the marketer; and
a step for contracting with the marketer to complete the aggregated electric power purchase.

7. An electric power marketing system comprising:
means for displaying a marketing menu screen via a network;
means for gathering information relating to electric power purchases by the plural electric power buyers;
means for combining electric power purchases by the plural electric power buyers based on information relating to their individual electric power purchases to compile an aggregated electric power purchase with high added value for a marketer; and
means for contracting with the marketer to complete the aggregated electric power purchase.
